## Europäisches Patentamt
## European Patent Office
## Office européen des brevets

(19)

(11) Veröffentlichungsnummer: **0 053 309**
**A1**

(12)

# EUROPÄISCHE PATENTANMELDUNG

(21) Anmeldenummer: **81109669.2**

(22) Anmeldetag: **13.11.81**

(51) Int. Cl.³: **C 08 L 97/02, B 29 J 5/00**

(30) Priorität: **28.11.80 DE 3044861**

(43) Veröffentlichungstag der Anmeldung: **09.06.82**
**Patentblatt 82/23**

(84) Benannte Vertragsstaaten: **AT BE CH FR LI SE**

(71) Anmelder: **Chemische Fabrik Kalk GmbH, Kalker Hauptstrasse 22 Postfach 910157, D-5000 Köln 91 (DE)**

(72) Erfinder: **Taubert, Rainer, Dr. Dipl.-Chem., Paffrather Strasse 140, D-5000 Köln 80 (DE)**
Erfinder: **Mayer, Johann, Dr. Dipl.-Chem., Am Mandelgarten 5, D-6713 Freinsheim (DE)**

(54) **Verfahren zur Herstellung von brandgeschützten Holzspanplatten oder -formkörpern.**

(57) Es wird ein Verfahren zur Herstellung von brandgeschützten Holzspanplatten oder -formkörpern beschrieben, nach dem ein Gemisch aus 10 bis 80 Gew.-% Holzspänen, 5 bis 30 Gew.-% Mineralsäure, 5 bis 25 Gew.-% organischer Bindemittel und 10 bis 60 Gew.-% Bormineral bei einer Temperatur von 100 bis 220 °C verpreßt wird.

EP 0 053 309 A1

Die vorliegende Erfindung betrifft ein Verfahren zur Herstellung von brandgeschützten Holzspanplatten oder -formkörpern.

Die Verwendung von nicht brandgeschützten Holzspanplatten stellt infolge der leichten Brennbarkeit oftmals eine große Gefahrenquelle dar. Es wurden daher schon verschiedene Möglichkeiten vorgeschlagen, Holzspanplatten brandwidrig auszurüsten. So ist beispielsweise in der DE-PS . . . . . . (Patentanmeldung P 29 33 755.1) ein Verfahren zur Herstellung von brandgeschützten Holzspanplatten beschrieben, wonach Holzspäne mit einer verdünnten Mineralsäure, wie beispielsweise verdünnter Phosphor- oder Schwefelsäure, und anschließend gegebenenfalls mit Alkalisilikatlösung behandelt werden. Die auf diese Weise vorbehandelten Holzspäne werden nach dem Trocknen in einem zweiten Arbeitsgang mit einem Formaldehydharz beleimt und anschließend zu Platten verpreßt. Ein Hauptnachteil dieses Verfahrens ist die zweistufige Arbeitsweise, denn die mit Mineralsäure und Alkalisilikatlösung behandelten Holzspäne müssen in einem zusätzlichen Arbeitsgang getrocknet werden. Erst dann wird das organische Bindemittel zugemischt und die Holzspanmasse zu Platten oder Formkörpern verpreßt.

Die Aufgabe der vorliegenden Erfindung besteht darin, ein vereinfachtes Verfahren zu finden, wonach die Erzeugung des Brandschutzmittels mit in den Arbeitsgang der Spanplattenherstellung integriert wird.

Gegenstand der vorliegenden Erfindung ist ein Verfahren zur Herstellung von brandgeschützten Holzspanplatten oder-formkörpern durch Verpressen eines Gemisches aus Holzspänen, Umsetzungsprodukten aus Bormineralien, und Mineralsäuren mit organischen Bindemitteln. Das Verfahren zeichnet sich dadurch aus, daß 10 bis 80 Gew% Holzspäne, 5 bis 30 Gew%
Mineralsäure, 5 bis 25 Gew% organisches Bindemittel und
10 bis 60 Gew% Bormineral zusammen vermischt und bei einer Temperatur von 100-220° C zu Platten oder Formkörpern
verpreßt werden. Während des Mischens soll eine Temperatur
von nicht höher als 50° C aufrechterhalten werden. Besonders vorteilhaft werden Gemische von 20 bis 70 Gew% Holzspänen, 7 bis 23 Gew% Mineralsäure, 8 bis 15 Gew% organischem Bindemittel und 15 bis 50 Gew% Borminerals bei Temperaturen von 130-150° C zu Platten oder Formkörpern verpreßt.

Als Bormineral wird für das erfindungsgemäße Verfahren
vorzugsweise Colemanit, als Mineralsäure vorzugsweise Schwefel- oder Phosphorsäure und als organisches Bindemittel ein
handelsübliches Carbamidharz, wie beispielsweise Melamin-
Formaldehydharz als wäßrige Suspension oder in Pulverform
eingesetzt. Der Zusatz eines Härters für das organische Bindemittel ist nicht erforderlich, dagegen ist die Verwendung
von Hydrophobierungsmitteln, wie beispielsweise Öle, Fette
oder Wachse, gegebenenfalls auch in wäßriger Suspension, zu
empfehlen, wenn hohe Qualitätsforderungen gestellt werden.

Infolge der hohen Konzentration der zu verwendenden Mineralsäure können an den Oberflächen der erfindungsgemäß hergestellten Holzspanplatten infolge einer Dehydratisierung unerwünschte Farbveränderungen auftreten, die möglicherweise
die Oberflächenhärte bzw. -glätte nachteilig verändern. Diese Veränderungen lassen sich beheben, wenn die Deckschicht-
Holzspäne vor dem Vermischen mit den genannten Brandschutzkomponenten mit einer verdünnten, alkalisch wirkenden, Lösung,
wie beispielsweise einer Alkalihydroxidlösung, behandelt werden. Die Gesamt-Wassermenge, die sich nach dem erfindungsgemäßen Verfahren ergibt, kann dabei unverändert bleiben.

Gleichermaßen günstig für das erfindungsgemäße Verfahren
ist die Verwendung eines Colemanit-Mineralsäure-Gemisches,
wobei etwa 5 bis 50 Gew% des Colemanits mit der Mineralsäure vor der Zumischung zu den Holzspänen voraufgeschlossen werden. Dadurch wird die Acidität der Mineralsäure
stark vermindert und unerwünschte Farbveränderungen unterbleiben.

Die beiden genannten Möglichkeiten zur Vorbehandlung der
Holzspäne können auch gegebenenfalls mitein-ander kombiniert werden.

Der Vorteil des erfindungsgemäßen Verfahrens besteht darin,
daß die Holzspäne mit der Mineralsäure, dem organischen Bindemittel und dem Bormineral vermischt werden und ohne vorherige Trocknung in den Arbeitsgang in an sich bekannter
Weise bei erhöhter Temperatur zu Platten oder Formkörpern
verpreßt werden. Der Aufschluß des Bormineals erfolgt also
erst kurz vor oder während des Preßvorgangs. Überraschenderweise wurde gefunden, daß die Bindeeigenschaften des organischen Bindemittels durch die frei vorliegende Mineralsäure
sowie durch die auftretende Reaktionswärme nicht nachteilig
beeinflußt werden. Entmischungserscheinungen, wobei sich
die einzelnen anorgan. bzw. organ. Komponenten trennen könnten, werden nach dem erfindungsgemäßen Verfahren nicht festgestellt.

Der Wassergehalt des zu verpressenden Holzspangemisches soll
nach Möglichkeit in seiner Gesamtmenge nicht höher als 20
bis 25 Gew% liegen, da ein höherer Wassergehalt längere Preßzeiten und höhere Preßtemperaturen erforderlich machen.

Je nach dem gewünschten Grad der Brandwidrigkeit kann der
Anteil an Holzspänen bzw. der erfindungsgemäß zu verwendenden Komponenten variiert werden. So ist es zu empfehlen, bei höherem Anteil an Bormineral, der einen entsprechend höheren Säureanteil erforderlich macht, die zu verwendende Mineralsäure in höherer Konzentration, und als Bindemittel ein festes Harz einzusetzen.

Das Verpressen des Gemisches aus Holzspänen, Säure, Bindemittel und Colemanit erfolgt unmittelbar nach dem Mischvorgang, also noch bevor die Aufschlußreaktion beendet ist. Auf diese Weise kann ein Teil der Reaktionswärme zum Schmelzen bzw. zur Aushärtung des Bindemittels genutzt werden, zudem können die aufzuwendenden Preßtemperaturen entsprechend niedrig eingestellt werden. Längere Standzeiten des zu verpressenden Gemisches sollten vermieden werden, da durch die auftretende Reaktionswärme vor dem Preßvorgang eine Aushärtung des Bindemittels eintreten kann, was möglicherweise die Wirksamkeit des erfindungemäßen Verfahrens nachteilig beeinflußt.

Zur Durchführung des Verfahrens der Erfindung werden zunächst Holzspäne, die gegebenenfalls zuvor mit einer alkalisch wirkenden Lösung, wie beispielsweise einer 5 bis 25 %igen Alkalihysroxidlöaung, behandelt sind, mit einer Mineralsäure, wie beispielsweise einer 20 bis 90 %igen Schwefel- oder Phosphorsäure, einem organischen Bindemittel, wie beispielsweise Melamin-Formaldehydharz, und einem fein vermahlenen Bormineral, wie beispielsweise Colemanit, vermischt. Eine Änderung der Reihenfolge, in der die einzelnen Komponetnen vermischt werden, ist zwar möglich, kann jedoch zu einer unerwünschten Klumpenbildung führen. Die zu verwendende Menge an Mineralsäure entspricht der zum Aufschluß des Borminerals und der gegebenenfalls zur Neutralisation des Alkalihydroxids benötigten stöchiometrischen Menge.

Zur Herstellung von brandgeschützten Holzspanplatten, die
der Brandklsse DIN 4102 A2 entsprechen sollen, werden für
100 Gew% Holzspäne 200 bis 300 Gew% Bormineral und die zu
dessen Aufschluß benötigte Menge von 100 bis 200 Gew% hochprozentiger Mineralsäure und bezogen auf die Gesamtmenge
des vorliegenden Gemisches etwa 5 bis 25 Gew% organisches
Bindemittel, wie beispielsweise Melamin-Formaldehydharz,
benötigt.

Sollen hingegen Holzspanplatten hergestellt werden, die
der Brandklasse DIN 4102 B1 entsprechen, genügen auf 100
Gew% Holzspäne etwa 10 bis 50 Gew% Bormineral und die entsprechend verringerte stöchiometrische Menge an Mineralsäure. Der Anteil an organischem Bindemittel bleibt dabei
unverändert.

Zum Schutz der Holzspäne vor dem Zusammenbringen mit der
hochprozentigen Mineralsäure ist es gegebenenfalls zweckmäßig, die zu verwendenden Holzspäne vor dem Vermischen mit
einer basisch wirkenden Substanz zu behandeln. Dazu werden
etwa 100 Gew.-Teile Holzspäne unter intensivem Mischen mit
etwa 20 bis 200 Gew.-Teilen einer 5 bis 25 %-igen Alaklihydroxidlösung behandelt. Den gleichen Schutz wie eine vorherige Behandlung der Holzspäne mit Alkalihydroxidlösung
bietet auch die Möglichkeit, ein Teil des Borminerals, beispielsweise etwa 5 bis 50 Gew% der zu verwendenden Menge,
mit der Gesamtmenge der Mineralsäure zu vermischen und diesem Säuregemisch die Holzspäne zuzufügen, anschließend das
organ. Bindemittel und letztlich das restliche Bormineral
zuzumischen. Als Mischvorrichtungen haben sich besonders
Pflugschar-, Schugi- oder andere Kurzzeitmischer bewährt.
Empfehlenswert ist hierbei eine säurebeständige Aussattung
dieser Mischvorrichtungen.

Die nach diesem erfindungsgemäßen Verfahren hergestellten Holzspangemische werden bei Temperaturen von 100-200° C, vorzugsweise bei 130-150° C, direkt zu Platten oder Formkörpern verpreßt.

Die erfindungsgemäß hergestellten Holzspanplatten oder -formkörper zeigen gute brandwidrige und mechanische Eigenschaften, die je nach dem Verhältnis Bromineral + Säure + Bindemittel : Holzspänen der Brandklasse DIN 4102 B1 bzw. A2 entsprechen.

Mir den folgenden Beispielen soll die Herstellung der erfindungsgemäßen Holzspanplatten und -formkörper erläutert werden.


Beispiel 1    (3-schichtige Platte nach DIN 4102 A2)

a)    Deckschicht-Material

In einem Pflugscharmischer werden 175 Gew.-Teile feine Holzspäne (0,25 - 1,0 mm) unter Mischen mit 100 Gew.- Teilen 20 %-iger Natriumhydroxidlösung bedüst und unter weiterem Mischen werden 240 Gew.-Teile 80 %-ige Schwefelsäure aufgedüst. Anschließend werden unter weiterem Mischen 110 Gew.-Teile Melamin-Formaldehydharz sowie 410 Gew.-Teile fein gemahlener Colemanit zudosiert.

b)    Mittelschicht-Material

In einem zweiten Pflugscharmischer werden parallel 127 Gew.-Teile grobe Holzspäne (1 - 3 mm) und 61 Gew.-Teile feine Holzspäne (0,25 - 1,0 mm) unter Mischen mit 300 Gew.-Teilen 65 %-iger Schwefelsäure bedüst. Anschließend werden unter weiterem Mischen 105 Gew.-Teile Melamin-
Formaldehydharz sowie 430 Gew.-Teile Colemanit zudosiert.

Die Gesamt-Mischzeit beträgt jeweils 4 bis 5 Minuten.

Auf ein Preßblech wird ein dünner Film eines handelsüblichen Trennmittels, wie es beispielsweise bei der Herstellung von Isocyanat-gebundenen Holzspanplatten verwendet
wird, aufgetragen. In einem Formkasten auf dem Preßblech
werden die Mischgüter in üblicher Weise dreischichtig aufgestreut und leicht vorgepreßt. Ein dünner Film des Trennmittels wird gleichfalls auf die Oberfläche der Preßmasse
aufgetragen und die Masse bei einer Temperatur von $140^{o}$ C
und einer Preßzeit von 17 sec/mm zu einer 14 mm starken
Platte verpreßt.

Die so erhaltene Holzspanplatte entspricht der Brandklasse
DIN 4102 A2

| | | |
|---|---|---|
| Dichte der Platte | 980 kg/m$^3$ | |
| Biegefestigkeit | 11,7 N/mm$^2$ | |
| Dickenquellung nach 2 h | 1,7 % | |
| " " 4 h | 3,8 % | |
| Wasseraufnahme nach 2 h | 9,8 % | |

Beispiel 2   (3-schichtige Platte nach DIN 4102 A2)

a)  Deckschicht-Material

In einem Pflugscharmischer werden 175 Gew.-Teile feine
Holzspäne (0,25 - 1,0 mm) vorgelegt und unter Mischen
ein vorgefertigtes Gemisch aus 300 Gew.-Teilen 65 %-iger Schwefelsäure und 120 Gew.-Teilen Colemanit zudosiert. Anschließend werden 110 Gew.-Teile Melamin-Formaldehydharz sowie 320 Gew.-Teile Colemanit zugemischt.

b) Mittelschicht-Material

In einem zweiten Pflugscharmischer wird parallel hierzu die gleiche Preßmasse, wie in Beispiel 1b angegeben, hergestellt.

Analog dem Beispiel 1 wird die Masse in 3 Schichten zu einer 14 mm starken Holzspanplatte verpreßt, die ebenfalls der Brandklasse DIN 4102 A2 entspricht.

| | |
|---|---|
| Dichte der Platte | 950 kg/m$^3$ |
| Biegefestigkeit | 11,2 N/mm$^2$ |
| Dickenquellung nach 2 h | 1,0 % |
| " " 4 h | 2,6 % |
| Wasseraufnahme nach 2 h | 8,1 % |

Beispiel 3 (einschichtige Platte nach DIN 4102 A2)

In einem Pflugscharmischer werden 350 Gew.-Teile Holzspäne (0,25 - 3 mm) vorgelegt und unter Mischen ein vorgefertigtes Gemisch aus 1100 Gew.-Teilen Phosphorsäure mit einem $P_2O_5$-Gehalt von 54 % und 240 Gew.-Teilen Colemanit zugefügt. Anschließend werden unter weiterem Mischen 240 Gew.-Teile Melamin-Formaldehydharz sowie weitere 640 Gew.-Teile Colemanit zudosiert.

Das Mischgut wird, wie in Beispiel 1 angegeben, bei einer Temperatur von 150° C und einer Preßzeit von 25 sec/mm zu einer 14 mm starken Platte verpreßt.

Die so erhaltene Holzspanplatte entspricht der Brandklasse
DIN 4102 A2

| | |
|---|---|
| Dichte der Platte | 930 kg/m$^3$ |
| Biegefestigkeit | 13,2 N/mm$^2$ |
| Dickenquellung nach 2 h | 2,2 % |
| " " 4 h | 4,3 % |
| Wasseraufnahme nach 2 h | 11,2 % |

**Beispiel 4**     (3-schichtige Platte nach DIN 4102 B1)

a) Deckschicht-Material

In einem Pflugscharmischer werden 215 Gew.-Teile feine
Holzspäne (0,25 - 1,0 mm) unter Mischen mit 50 Gew.-
Teilen 5 %-iger Natriumhydroxidlösung bedüst und unter
weiterm Mischen werden 51 Gew.-Teile 60 %-ige Schwefelsäure aufgedüst. Anschließend werden unter weiterem
Mischen 42 Gew.-Teile Melamin-Formaldehydharz sowie
64 Gew.-Teile Colemanit zudosiert.

b) Mittelschicht-Material

In einem zweiten Pflugscharmischer werden parallel 215
Gew.-Teile grobe Holzspäne (1 - 3 mm) unter Mischen mit
75 Gew.-Teilen 38 %-iger Schwefelsäure bedüst. Anschließend werden unter weiterem Mischen 62 Gew.-Teile einer
64 %-igen wäßrigen Melamin-Formaldehydharz-Suspension
eingedüst und 64 Gew.-Teile Colemanit zudosiert.

Analog dem Beispiel 1 wird die Masse zu einer 14 mm starken
Platte verpreßt.

Die so erhaltene Holzspanplatte entspricht der Brandklasse
DIN 4102 B1.

Dichte der Platte          710 kg/m$^3$
Biegefestigkeit            23,5 N/mm$^2$
Dickenquellung nach 2 h     4,2 %
"                 "     4 h    12,5 %
Wasseraufnahme nach 2 h    20,1 %

## Patentansprüche

1. Verfahren zur Herstellung von brandgeschützten Holzspanplatten oder -formkörpern durch Verpressen eines Gemisches aus Holzspänen, Umsetzungsprodukten aus Bormineralien und Mineralsäuren mit organischen Bindemitteln, dadurch gekennzeichnet, daß 10 bis 80 Gew% Holzspäne, 5 bis 30 Gew% Mineralsäure, 5 bis 25 Gew% organisches Bindemittel und 10 bis 60 Gew% Bormineral zusammen vermischt und bei einer Temperatur von 100-220° C zu Platten oder Formkörpern verpreßt werden.

2. Verfahren nach Anspruch 1, dadurch gekennzeichnet, daß für 20 bis 70 Gew% Holzspäne, 7 bis 23 Gew% Mineralsäure, 8 bis 15 Gew% organisches Bindemittel und 15 bis 50 Gew% Bormineral bei Temperaturen von 130-150° C zu Platten oder Formkörpern verpreßt werden.

3. Verfahren nach Ansprüchen 1 und 2, dadurch gekennzeichent, daß als Mineralsäure Schwefel- oder Phosphorsäure verwendet wird.

4. Verfahren nach Ansprüchen 1 und 2, dadurch gekennzeichnet, daß als Bormineral Colemanit verwendet wird.

5. Verfahren nach Ansprüchen 1 und 2, dadurch gekennzeichnet, daß als organisches Bindemittel ein Carbamidharz verwendet wird.

6. Verfahren nach Ansprüchen 1 und 2, <u>dadurch gekenn-zeichnet</u>, daß die Holzspäne gegebenenfalls vor dem Vermischen mit den Brandschutzkomponenten mit einer basisch wirkenden Substanz, wie beispielsweise Alkalihydroxidlösung, behandelt werden.

7. Verfahren nach Ansprüchen 1 und 2, <u>dadurch gekenn-zeichnet</u>, daß 5 bis 50 Gew% des Borminerals mit der Mineralsäure vor der Zumischung zu den Holzspänen voraufgeschlossen werden.

8. Verfahren nach Ansprüchen 1 und 2, <u>dadurch gekenn-zeichnet</u>, daß während des Mischens eine Temperatur von nicht höher als 50° C aufrechterhalten wird.

Europäisches
Patentamt

**EUROPÄISCHER RECHERCHENBERICHT**

0053309

Nummer der Anmeldung

EP 81 10 9669

| Kategorie | EINSCHLÄGIGE DOKUMENTE | betrifft Anspruch |
|---|---|---|
| | Kennzeichnung des Dokuments mit Angabe, soweit erforderlich, der maßgeblichen Teile | |
| Y | DE - A - 2 831 455 (KALK)<br><br>* Seite 9, Zeilen 8 bis 11; Seite 10, Zeilen 10 bis 23; Patentansprüche * | 1-5,7 |
| Y | FR - A - 1 470 074 (WEYERHAEUSER)<br><br>* Beispiele und Zusammenfassung * | 1-3,7 |
| Y | DE - B - 1 205 694 (BRITISH PLIMBER)<br><br>* Beispiele und Patentanspruch * | 1,5 |
| Y | GB - A - 1 435 519 (BORAX CONSOLIDATED)<br><br>* Patentansprüche * | 1,5 |

**KLASSIFIKATION DER ANMELDUNG (Int. Cl.3)**

C 08 L 97/02
B 29 J 5/00

**RECHERCHIERTE SACHGEBIETE (Int. Cl.3)**

C 08 L 97/02
B 29 J 5/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 09-03-1982 | LENSEN |

EPA form 1503.1  06.78